# EUROPEAN PATENT SPECIFICATION

(11) **EP 3 989 672 B1**
(45) Date of publication and mention of the grant of the patent: **24.12.2025**
(21) Application number: 20827290.6
(22) Date of filing: 12.06.2020
(51) Int. Cl.: H04W 76/12, H04W 84/12

(54) **METHOD AND DEVICE FOR ESTABLISHING AND RELEASING LOCAL AREA NETWORK TUNNEL**
VERFAHREN UND VORRICHTUNG ZUM EINRICHTEN UND FREIGEBEN EINES TUNNELS FÜR EIN LOKALES NETZWERK
PROCÉDÉ ET DISPOSITIF D'ÉTABLISSEMENT ET DE LIBÉRATION DE TUNNEL DE RÉSEAU LOCAL

(30) Priority: 18.06.2019 CN 201910527550
(43) Date of publication of application: 27.04.2022
(73) Proprietor: CHINA MOBILE COMMUNICATION CO., LTD. RESEARCH INSTITUTE, Beijing 100053 (CN); China Mobile Communications Group Co., Ltd, Beijing 100032 (CN)
(72) Inventor: LIU, Chao, Beijing 100032 (CN); LIU, Tangqing, Beijing 100032 (CN); WANG, Dan, Beijing 100032 (CN)
(74) Representative: GPI Brevets
(86) International application number: PCT/CN2020/095802
(87) International publication number: WO 2020/253627

(56) References cited:
- WO-A1-2018/232253
- WO-A1-2019/027742
- CN-A- 108 702 724
- OPPO: "Adding 5GLAN N19 tunnel management", vol. SA WG2, no. Reno, USA; 20190513 - 20190517, 16 May 2019 (2019-05-16), XP051736370, Retrieved from the Internet <URL:http://www.3gpp.org/ftp/Meetings%5F3GPP%5FSYNC/SA2/Docs/S2%2D1906562%2Ezip> [retrieved on 20190516]
- OPPO: "Adding 5GLAN N19 tunnel management", 3GPP TSG-SA WG2 MEETING #133 S2-1906562, 17 May 2019 (2019-05-17), XP051737143
- NOKIA ET AL.: "5G LAN group communication with UPF autonomous traffic forwarding", SA WG2 MEETING #133 S2-1905197, 17 May 2019 (2019-05-17), XP051720706

## Description

### TECHNICAL FIELD

Embodiments of this disclosure relates to the field of communication technology, and more particularly to an LAN tunnel establishment method and a session management function (SMF).

### BACKGROUND

In a fifth generation (5G) mobile communication network architecture, several services which are relatively independent and can be flexibly invoked constitute network functions, and these functions provide their services for any permitted network function through a unified interface.

Session management function (SMF) is responsible for functions such as session lifecycle management for 5G users, Internet Protocol (IP) address allocation, data routing, service continuity management, policy rule matching, and traffic billing processing.

User plane function (UPF) is responsible for functions such as routing and forwarding of user data messages, service identification and policy enforcement.

Unified data management (UDM) is responsible for functions such as 5G user subscription data management, user authentication data management, and user identifier management.

5G local area network (LAN) is one of the most promising technologies in a 3GPP related stage. The 5G LAN can provide customized 5G industry LAN for partners, such that enterprise terminals and enterprise cloud reside in the same "local area network". The 5G LAN is mainly directed to enterprise cloud access, intelligent manufacturing and other fields, to realize flexible group management of terminals, direct communication and access to the enterprise cloud anytime and anywhere.

In 5G LAN technology, the concept of group is introduced in 5G networks, and users in the same "LAN" belong to a group. A group to which a user belongs can be designated in user subscription data, and a group can be denoted with a specific data network name (DNN) or group identifier (group ID).

Based on the conventional standard, all users within one 5G LAN group are served by one SMF or an SMF set. Users of the group are served by one or more UPFs.

The 5G LAN group is an important granularity for the 5G LAN. Unlike the N9 tunnel between the big network UPFs, the LAN tunnel is a tunnel between UPFs that is established for communication between UEs within the 5G LAN group. How to establish and release the LAN tunnel remains an urgent problem.

OPPO: "Adding 5GLAN N19 tunnel management", 3GPP DRAFT, S2-1906562 relates to management of the N19 interface and tunnel.

### SUMMARY

Embodiments of this disclosure provide an LAN tunnel establishment method and an SMF, characterized by comprising: sending an establishment request to a first UPF, for establishing a local area network tunnel between the first UPF and a second UPF, wherein the establishment request sent to the first UPF does not comprise core network tunnel information; receiving an establishment response from the first UPF, wherein the establishment response received from the first UPF comprises core network tunnel information assigned by the first UPF; sending an establishment request to the second UPF, for establishing the local area network tunnel between the first UPF and the second UPF, wherein the establishment request sent to the second UPF comprises the core network tunnel information assigned by the first UPF; receiving an establishment response from the second UPF, wherein the establishment response received from the second UPF comprises core network tunnel information assigned by the second UPF and sending the core network tunnel information assigned by the second UPF to the first UPF.

The invention is set out in the appended set of claims.

In the embodiments of this disclosure, the N19 tunnel is established and deleted through signaling, without maintaining the N19 tunnel by an operation and maintenance personnel through manual configuration, which greatly improves the network operation and maintenance efficiency, realizes the establishment and release of an LAN tunnel between different UPFs in 5G LAN, and improves the management process of the 5G LAN tunnel.

### BRIEF DESCRIPTION OF DRAWINGS

Various other advantages and benefits will become apparent to a person of ordinary skill in the art upon reading detailed description of the following optional implementations. Accompanying drawings are merely used for showing the optional implementations, and are not considered as a limitation on this disclosure. In all accompanying drawings, a same reference symbol is used to indicate a same part. In the accompanying drawings:
FIG. 1 is a schematic structural diagram of a service-based 5G network architecture;
FIG. 2 is a flowchart of an LAN tunnel establishment method according to an embodiment of this disclosure;
FIG. 3 is a flowchart of an LAN tunnel release method according to a non-claimed embodiment of this disclosure;
FIG. 4 is another flowchart of an LAN tunnel establishment method according to a non-claimed embodiment of this disclosure;
FIG. 5 is another flowchart of an LAN tunnel release method according to a non-claimed embodiment of this disclosure;
FIG. 6 illustrates a process of triggering N19 tunnel establishment when a terminal requests PDU session establishment in a non-roaming/roaming traffic local offloading scenario according to an embodiment of this disclosure;
FIG. 7 illustrates a process of triggering N19 tunnel establishment when user plane data is sent for the first time in the non-roaming/roaming traffic local offloading scenario according to an embodiment of this disclosure;
FIG. 8 illustrates a process of triggering N19 tunnel establishment when the terminal requests PDU session establishment in a home-routed roaming scenario according to an embodiment of this disclosure;
FIG. 9 illustrates a process of triggering N19 tunnel release when the terminal requests PDU session release in the non-roaming/roaming traffic local offloading scenario according to a non-claimed embodiment of this disclosure;
FIG. 10 illustrates a process of triggering N19 tunnel release when PCF/SMF requests PDU session release in the non-roaming/roaming traffic local offloading scenario according to a non-claimed embodiment of this disclosure;
FIG. 11 illustrates a process of triggering N19 tunnel release when the terminal requests PDU session release in the home-routed roaming scenario according to a non-claimed embodiment of this disclosure;
FIG. 12 illustrates a process of triggering N19 tunnel release when SMF requests PDU session release in the home-routed roaming scenario according to a non-claimed embodiment of this disclosure;
FIG. 13 is a schematic structural diagram of an SMF according to an embodiment of this disclosure;
FIG. 14 is another schematic structural diagram of an SMF according to a non-claimed embodiment of this disclosure;
FIG. 15 is yet another schematic structural diagram of an SMF according to a non-claimed embodiment of this disclosure;
FIG. 16 is still another schematic structural diagram of an SMF according to a non-claimed embodiment of this disclosure;
FIG. 17 is a schematic structural diagram of a UPF according to a non-claimed embodiment of this disclosure;
FIG. 18 is another schematic structural diagram of a UPF according to a non-claimed embodiment of this disclosure;
FIG. 19 is yet another schematic structural diagram of a UPF according to a non-claimed embodiment of this disclosure;
FIG. 20 is still another schematic structural diagram of a UPF according to a non-claimed embodiment of this disclosure;
FIG. 21 is a schematic structural diagram of a network device to which embodiments of this disclosure are applicable.

### DETAILED DESCRIPTION

The following clearly and completely describes the technical solutions in the embodiments of this disclosure with reference to the accompanying drawings in the embodiments of this disclosure. Apparently, the described embodiments are some rather than all of the embodiments of this disclosure. All other embodiments obtained by a person of ordinary skill in the art based on the embodiments of this disclosure without creative efforts shall fall within the scope of this disclosure.

The term "include" and any other variants in the specification and claims of this application are intended to cover non-exclusive inclusion, for example, a process, method, system, product, or device that includes a list of steps or units is not necessarily limited to those clearly listed steps or units, but may include other steps or units not clearly listed or inherent in such a process, method, product, or device. In addition, usage of "and/or" in the specification and claims represents at least one of connected objects. For example, A and/or B represents the following three cases: only A exists, only B exists, and both A and B exist.

In the embodiments of this disclosure, the word such as "exemplary" or "example" is used to represent giving an example, an illustration, or a description. Any embodiment or design scheme described as an "exemplary" or "example" in the embodiments of this disclosure should not be explained as being more preferred or having more advantages than another embodiment or design scheme. To be precise, the use of the term such as "exemplary" or "for example" is intended to present a related concept in a specific manner.

The techniques described herein are not limited to fifth-generation mobile communication (5th-generation, 5G) system and subsequently evolved communication system, and are not limited to long-term evolution (LTE)/LTE-Advanced (LTE-A) system. They can also be used for various wireless communication systems, such as code division multiple access (CDMA), time division multiple access (TDMA), frequency division multiple access (FDMA), orthogonal frequency division multiple access (OFDMA), single-carrier frequency-division multiple access (SC-FDMA) and other systems.

The terms "system" and "network" are often used interchangeably. The CDMA system can implement radio technologies such as the CDMA2000, Universal Terrestrial Radio Access (UTRA). The UTRA includes wideband code division multiple access (WCDMA) and other CDMA variants. TDMA systems may implement radio technologies such as Global System for Mobile Communication (GSM). OFDMA systems may implement radio technologies such as Ultra Mobile Broadband (UMB), evolved UTRA (E-UTRA), IEEE 802.11 (Wireless Fidelity, Wi-Fi), IEEE 802.16 (Worldwide Interoperability for Microwave Access, WiMAX), IEEE 802.20, Flash-OFDM. UTRA and E-UTRA are parts of Universal Mobile Telecommunications System (UMTS). LTE and more advanced LTE (such as LTE-A) are new UMTS versions using E-UTRA. UTRA, E-UTRA, UMTS, LTE, LTE-A and GSM are described in the literature from the organization called the "3rd Generation Partnership Project" (3GPP). CDMA2000 and UMB are described in the literature from the organization called "3rd Generation Partnership Project 2" (3GPP2). The techniques described here can be used for the systems and radio technologies mentioned above as well as other systems and radio technologies.

The terminals provided in the embodiment of this disclosure may be mobile phone, tablet computer, notebook computer, ultra-mobile personal computer (UMPC), netbook or personal digital assistant (PDA), mobile Internet device (MID), wearable device or on-board device or the like.

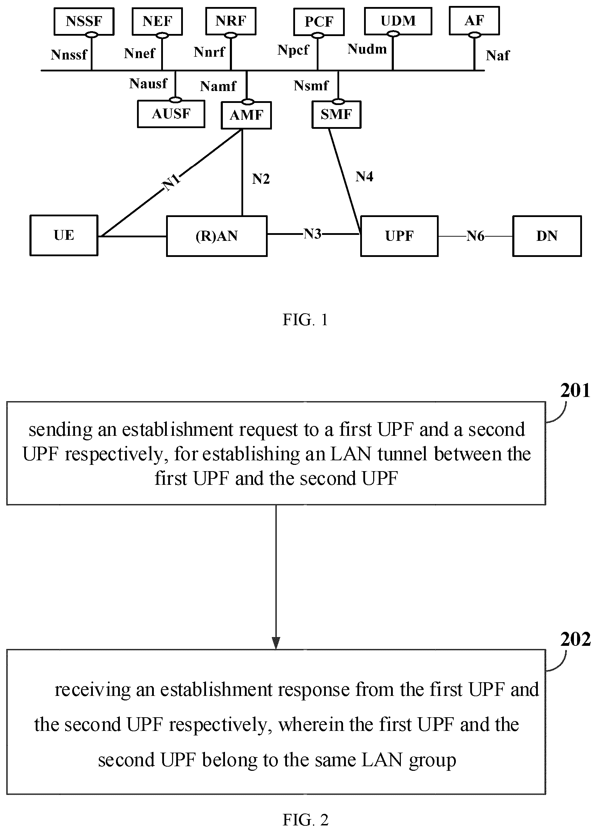

Referring to FIG. 2, an embodiment of this disclosure provides an LAN tunnel establishment method. The method is executed by an SMF, and specifically includes: a step 201 and a step 202.

Step 201: sending an establishment request to a first UPF and a second UPF respectively, for establishing an LAN tunnel between the first UPF and the second UPF.

In some implementations, the first UPF is a UPF selected by the SMF for a PDU session when the PDU session is established, and the second UPF is any other UPF in the LAN group.

In some implementations, the first UPF and the second UPF are any UPFs in the LAN group.

Step 202: receiving an establishment response from the first UPF and the second UPF respectively, wherein the first UPF and the second UPF belong to the same LAN group.

In some implementations, the first UPF and the second UPF are protocol data unit (PDU) session anchor UPFs used for a service of a 5G LAN type.

In some implementations, the LAN tunnel is an N19 tunnel, and it is certainly understood that the name of the LAN tunnel is not specifically limited in the embodiments of this disclosure.

In some implementations, the establishment request is used to establish the N19 tunnel. The establishment request is: N4 session establishment request or N4 session modification request, or N19 session establishment request. Optionally, the establishment request includes: a session identifier (such as N19 Session ID) and/or tunnel identifier.

In some implementations, the establishment request sent to the first UPF and the second UPF includes: N19 core network tunnel information assigned by the SMF, such as N19 tunnel identifier and/or address.

In some implementations, the establishment request sent to the first UPF does not include: N19 core network tunnel information, such as N19 tunnel identifier and/or address;
the establishment response received from the first UPF includes: the N19 core network tunnel information assigned by the first UPF, such as N19 tunnel identifier and/or address;
the establishment request sent to the second UPF includes: the N19 core network tunnel information assigned by the first UPF, such as N19 tunnel identifier and/or address;
the establishment response received from the second UPF includes: the N19 core network tunnel information assigned by the second UPF, such as N19 tunnel identifier and/or address.

For example, if an SMF assigns the tunnel ID or the like, the request message sent to the first UPF and the second UPF contains a core network tunnel message assigned to the first UPF and the second UPF, i.e., the ID and IP address of the UPF side N19 tunnel.

If a UPF assigns the tunnel ID or the like, the message that SMF sends to the first UPF has no tunnel ID information, there are tunnel information assigned by the UPF in the response message (the core network tunnel message, namely the ID and IP address of the UPF side N19 tunnel), then the message sent by the SMF to the second UPF includes the tunnel information, and in the response message of the second UPF, the second UPF tunnel information assigned by the second UPF is sent to the SMF. Subsequently, the SMF sends the tunnel information to the first UPF.

In some implementations, an occasion of triggering sending an establishment request includes one or more of the following:
(1) when the PDU session is established, there is no N19 tunnel between the UPF selected for the PDU session and other UPF in the LAN group;
(2) there is a need for data forwarding between UPFs, and there is no N19 tunnel between UPFs;
(3) an application requirement of an application function (AF);
(4) a policy of a policy control function (PCF);
(5) an instruction of a network administrator;
(6) pre-configured by the SMF before the PDU session is established.

For example, the N19 tunnel establishment process is as followed.
1) SMF initiates the N19 tunnel establishment process. SMF initiates the N19 tunnel establishment process, and SMF assigns and carries an N19 GPRS tunneling protocol user plane (GTP-U) tunnel ID. The first UPF feeds back a response after receiving the tunnel ID. The SMF initiates an N19 tunnel establishment request carrying the N19 GTP-U tunnel ID to inform a second UPF in the group, and the second UPF responds to the tunnel establishment request.
   For example, a judgment logic for SMF to initiate the N19 tunnel establishment process: the SMF enquires about the UPFs belonging to the 5GLAN group after receiving the PDU session establishment request, and if the UPF selected during the PDU session establishment is a new UPF of the 5GLAN group, the SMF initiates the establishment process of the N19 tunnel between the new UPF and existing UPFs in the group, the SMF assigns and carries an N19 GTP-U tunnel ID.
2) UPF initiates the N19 tunnel establishment process. The first UPF notifies the SMF when UE within the group has data transmission requirements. The SMF enquires about whether an N19 tunnel has been established between the first UPF and the second UPF and, if no, the SMF initiates a request to the first UPF, and assigns and carries the N19 GTP-U tunnel ID. Then the SMF initiates a N19 tunnel establishment request carrying the N19 GTP-U tunnel ID to the second UPF.

For example, a judgment logic for UPF to initiate the N19 tunnel establishment process: when UE has data transmission requirements, the UPF checks whether the UE is a 5GLAN group user. If so, the UPF notifies the SMF. The SMF enquires about whether a UPF 1 has established an N19 tunnel with another UPF2 with which communication is required, and if not, the SMF initiates the N19 tunnel establishment process and the SMF assigns an N19 GTP-U tunnel ID.

In the embodiment of this disclosure, when a UE session is established, if the UPF assigned by the SMF varies from the UPF used in the current group, an N19 tunnel is established. When the user plane has data transmission requirements, if the UPF detects the need for data interaction with other UPF with which an N19 tunnel have not yet been established, the N19 tunnel is established, such that the establishment of an LAN tunnel between different UPFs in the 5G LAN is realized, and the management process of 5G LAN tunnel is improved, thereby achieving establishing and deleting an N19 tunnel through signaling, without maintaining the N19 tunnel by an operation and maintenance personnel through manual configuration, which greatly improves the network operation and maintenance efficiency.

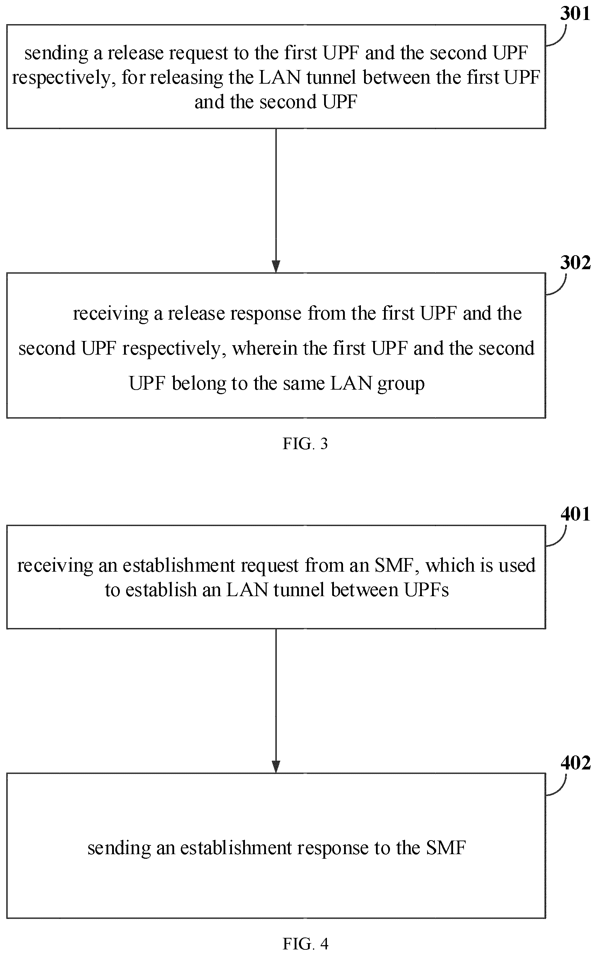

Referring to FIG. 3, a non-claimed embodiment of this disclosure further provides an LAN tunnel release method. The method is executed by an SMF, and specifically includes: a step 301 and a step 302.

Step 301: sending a release request to the first UPF and the second UPF respectively, for releasing the LAN tunnel between the first UPF and the second UPF.

In some implementations, the first UPF is the UPF where the PDU session is located when the PDU session is deleted, and the second UPF is any other UPF in the LAN group.

In some implementations, the first UPF and the second UPF are arbitrary UPFs in the LAN group.

Step 301: receiving a release response from the first UPF and the second UPF respectively, wherein the first UPF and the second UPF belong to the same LAN group.

In some implementations, the first UPF and the second UPF are PDU session anchor UPFs used for a 5G LAN-type service.

In some implementations, the LAN tunnel is named N19 tunnel. It is understood that the name of the LAN tunnel is not limited in the embodiment of this disclosure.

In some implementations, the release request is used to delete the N19 tunnel, and the release request is: N4 session release or deletion or modification request (N4 Session release/delete/modify Request); or, N19 session release or deletion request (N19 Session release/delete Request). Optionally, the release request carries an N19 GTP-U tunnel ID parameter, etc.

In some implementations, the release request includes the N19 core network tunnel information, such as an N19 tunnel identifier or address (e.g., an IP address).

In some implementations, an occasion of triggering sending a release request includes one or more of the following:
(1) when the PDU session is deleted, the UPF where the PDU session is located does not have other user/session of the LAN group;
(2) there is no need for data forwarding between UPFs.

For example, the N19 tunnel release process:
the SMF initiates the N19 tunnel release process and, upon receiving, the first UPF abandons all packets, deletes the N19 tunnel information and context, and sends the N19 tunnel release response to the SMF. The SMF sends the N19 tunnel release request carrying the N19 GTP-U tunnel ID to the UPF2, the second UPF abandons all packets, deletes the N19 tunnel information and context, and sends the N19 tunnel release response to the SMF.

For example, a judgment logic for the SMF to initiate the N19 tunnel release: after receiving the PDU session release request, the SMF enquires about, according to 5GLAN group ID, whether another user of the group exists in the UPF, and if the UE is the last user in the group, the SMF initiates the N19 release process (N19 GTP-U Tunnel ID).

Optionally, if the policy sent by the PCF specifies a duration for retaining the tunnel after the last user in the group releases the PDU Session, then the N19 release process is initiated if the retention duration expires and no new UE is online within the duration.

In the embodiment of this disclosure, when the SMF detects that no user of the 5G LAN group exists in the UPF, the SMF or the UPF initiates the deletion of tunnels to other UPFs, which improves the management of the 5G LAN tunnel. Thereby establishing and deleting an N19 tunnel through signaling is achieved, without maintaining the N19 tunnel by an operation and maintenance personnel through manual configuration, which greatly improves the network operation and maintenance efficiency.

Referring to FIG. 4, a non-claimed embodiment of this disclosure further provides an LAN tunnel establishment method. The method is executed by a UPF, and specific steps thereof include: a step 401 and a step 402.

Step 401: receiving an establishment request from an SMF, which is used to establish an LAN tunnel between UPFs.

Step 402: sending an establishment response to the SMF.

In some implementations, the UPF is the UPF where the PDU session is located when the PDU session is deleted.

In some implementations, the UPF is any UPF in the local area network group.

In some implementations, the UPF is a PDU session anchor UPF used for a 5G LAN type service.

In some implementations, the local area network tunnel is named N19 tunnel. Of course, it is understood that the name of the local area network tunnel is not specifically limited in the embodiments of this disclosure.

In some implementations, the establishment request is used to establish the N19 tunnel, and the establishment request is: N4 session establishment request or N4 session modification request; or N19 session establishment request. Optionally, the establishment request includes: session identifier (for example, N19 Session ID) and/or tunnel identifier.

In some implementations, the establishment request may include: the identifier and/or address of the N19 tunnel assigned by the SMF. In other implementations, the establishment request may not include: the identifier and/or address of the N19 tunnel.

In some implementations, the establishment response may include: the identifier and/or address of the N19 tunnel assigned by the UPF.

For example, if an SMF assigns tunnel ID and other information, the request messages sent to the first UPF and the second UPF both include the core network tunnel message assigned to the first UPF and the second UPF, that is, the ID and IP address of the N19 tunnel.

If the UPF assigns information such as the tunnel ID, the message sent by the SMF to the first UPF does not contain the tunnel ID information, and the response message contains the tunnel information (core network tunnel message, that is, the ID and IP address of the N19 tunnel on the UPF side) assigned by the UPF. Then, the message sent by the SMF to the second UPF includes tunnel information. In the response message of the second UPF, the tunnel information of the second UPF assigned by the second UPF is sent to the SMF, and then the SMF sends the tunnel information to the first UPF.

In some implementations, an occasion of triggering the SMF to send the establishment request includes one or more of the following:
(1) when a PDU session is established, there is no N19 tunnel between the UPF selected for the PDU session and other UPF in the LAN group;
(2) there is a data forwarding requirement between UPFs, and there is no N19 tunnel between the UPFs;
(3) an application requirement of an application function (AF);
(4) a policy of a policy control function (PCF);
(5) an instruction from a network administrator;
(6) pre-configured by the SMF before the PDU session is established.

The embodiments of this disclosure improve the management of the 5G LAN tunnel, thereby achieving establishing and deleting an N19 tunnel through signaling, without maintaining the N19 tunnel by an operation and maintenance personnel through manual configuration, which greatly improves the network operation and maintenance efficiency.

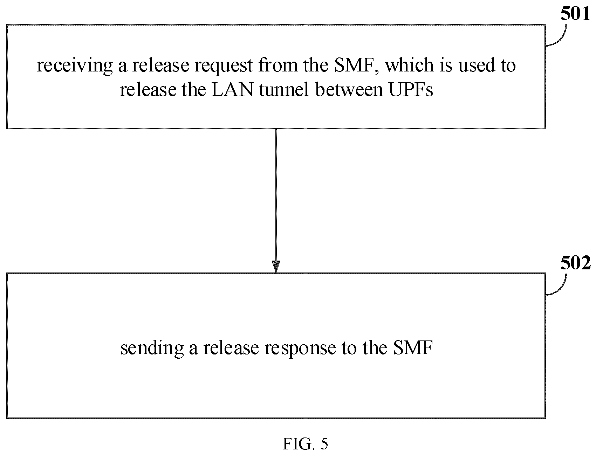

Referring to FIG. 5, a non-claimed embodiment of this disclosure further provides an LAN tunnel release method. The method is executed by a UPF, and includes a step 501 and a step 502.

Step 501: receiving a release request from the SMF, which is used to release the LAN tunnel between UPFs.

Step 502: sending a release response to the SMF.

In some implementations, the UPF is a UPF where the PDU session is located when the PDU session is deleted, and the second UPF is any other UPF in the LAN group.

In some implementations, the UPF is an arbitrary UPF in the LAN group.

In some implementations, the first UPF and the second UPF are PDU session anchor UPFs used for a 5G LAN-type service.

In some implementations, the LAN tunnel is an LAN tunnel between two PDU session anchor UPFs used for a 5G LAN-type service and is named N19 tunnel. It is understood that the name of the LAN tunnel is not limited in the embodiments of this disclosure.

In some implementations, the release request is used to delete the N19 tunnel, and the release request is: N4 session release or deletion or modification request (N4 Session release/delete/ modify Request); or, N19 session release or deletion request (N19 Session release/delete Request).Optionally, the release request carries the N19 GTP-U tunnel ID parameter, etc.

In some implementations, the release request includes the N19 core network tunnel information, such as an N19 tunnel identifier or address (e.g., an IP address).

In some implementations, an occasion of triggering the SMF to send a release request includes one or more of the following:
(1) when the PDU session is deleted, the UPF where the PDU session is located does not have other user/session of the LAN group;
(2) there is no need for data forwarding between UPFs.

The embodiment of this disclosure improves the management of the 5G LAN tunnel, thereby achieving establishing and deleting an N19 tunnel through signaling, without maintaining the N19 tunnel by an operation and maintenance personnel through manual configuration, which greatly improves the network operation and maintenance efficiency.

Embodiment 1: a process of triggering N19 tunnel establishment when UE requests PDU session establishment in a non-roaming/roaming traffic local offloading scenario

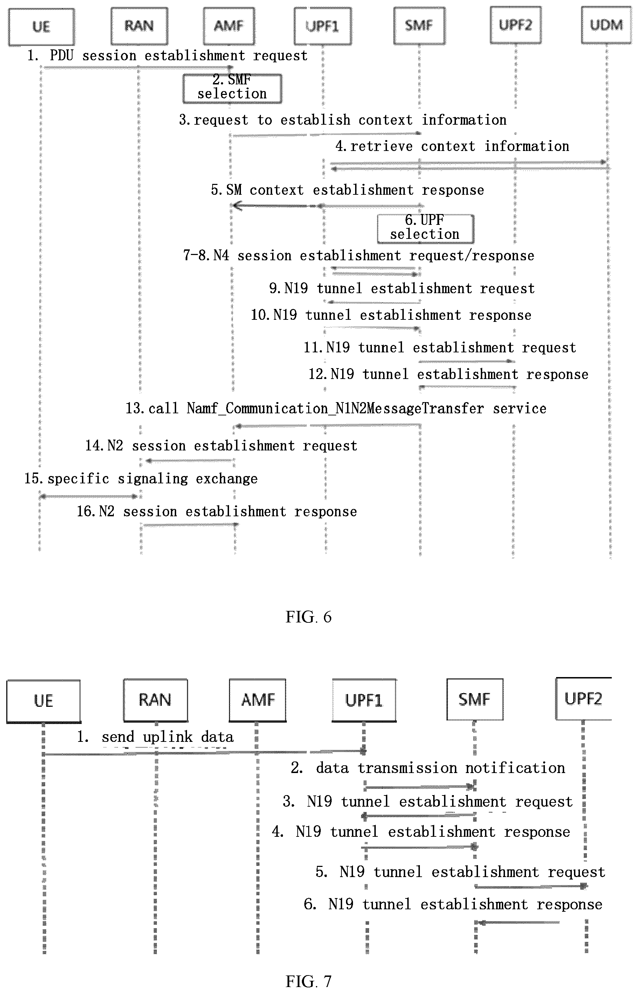

Referring to FIG. 6, the specific process is as followed.

Step 1: the UE sends a PDU session establishment request to an access and mobility management function (AMF).

For example, the PDU session establishment request includes a 5GLAN group ID or DNN, and a group can be represented by the DNN or group ID.

If the UE does not carries the 5GLAN group ID in the request, the AMF can retrieve group information from the UDM/PCF/network element function (NEF)/user data repository (UDR).

Step 2: the AMF selects the SMF based on the 5GLAN group ID or the DNN.

Step 3: the AMF requests, by calling the Nsmf_PDUSession_CreateSMContext Request, the SMF to establish the PDU session SM context information.

Step 4: the SMF retrieves the UE subscription data from a UDM.

Step 5: the SMF sends an Nsmf_PDUSession_CreateSMContext response to the AMF.

Step 6: the SMF selects the UPF for the UE based on the policy in the PCF.

Step 7: the SMF establishes an N4 tunnel with the selected UPF1.

Step 8: the UPF1 sends an N4 tunnel establishment success response.

Step 9: the SMF enquires about the UPFs belonging to the 5GLAN group, if the UPF selected in the step 6 is a new UPF of the 5GLAN group, then the establishment process of the N19 tunnel between the new UPF and the existing UPF in the group is initiated, and the SMF sends an N19 tunnel establishment request to the UPF1 through N4, and the SMF assigns and carries N19 GTP-U tunnel ID in the request.

Step 10: the UPF1 sends an N19 tunnel establishment request response to the SMF.

Step 11: the SMF sends an N19 tunnel establishment request carrying the N19 GTP-U tunnel ID to the UPF 2 via N4.

Step 12: the UPF2 sends the N19 tunnel establishment success response to the SMF, which carries the 5GLAN group ID, N19 GTP-U tunnel ID, and UPF IP address.

Step 13: the SMF calls the Namf_Communication_N1N2MessageTransfer service.

Step 14: the AMF sends an N2 PDU Session establishment request to the RAN.

Step 15: the RAN performs a specific signaling exchange with the UE.

Step 16: the RAN sends an N2 PDU Session response to the AMF.

Embodiment 2: a process of triggering N19 tunnel establishment when user plane data is sent for the first time in the non-roaming/roaming traffic local offloading scenario.

Referring to FIG. 7, the specific process is as followed.

Step 1: the UE performs communication within the group and sends uplink data.

Step 2: after the UPF receives the data transmission request, the UPF triggers the data transmission notification subscribed by the SMF.

Step 3: the SMF enquires about the UPFs belonging to the 5GLAN group. If the UPF1 is a new UPF of the 5 GLAN group, the establishment process of the N19 tunnel between the new UPF and the existing UPF in the group is initiated, and the SMF sends the N19 tunnel establishment request to the UPF1 through N4, and assigns and carries N19 GTP-U Tunnel ID in the request.

Step 4: the UPF1 sends the N19 tunnel establishment request response to the SMF.

Step 5: the SMF sends an N19 tunnel establishment request carrying the N19 GTP-U Tunnel ID to the UPF2 through N4.

Step 6: the UPF2 sends the N19 tunnel establishment success response to the SMF, which carries 5 GLAN group ID, N19 GTP-U Tunnel ID, and UPF IP address.

Embodiment 3: a process of triggering N19 tunnel establishment when the terminal requests PDU session establishment in a home-routed roaming scenario.

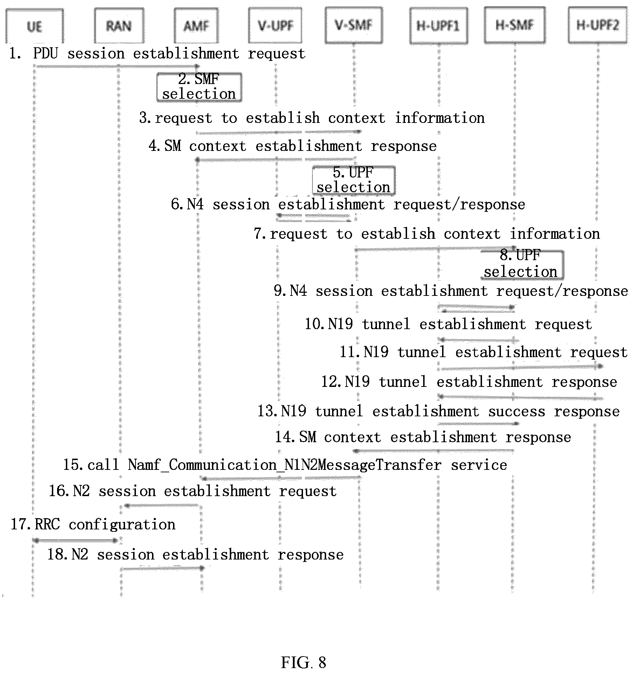

Referring to FIG. 8, the specific process is as followed.

Step 1: the UE sends a PDU session establishment request to the AMF.

For example, the PDU session establishment request includes a 5GLAN group ID.

Step 2: the AMF selects a V-SMF based on the 5GLAN group ID.

Step 3: the AMF requests, by calling the Nsmf_PDUSession_CreateSMContext Request request, the V-SMF to establish the PDU Session SM context information.

Step 4: the V-SMF sends an Nsmf_PDUSession_CreateSMContext response to the AMF.

Step 5: the V-SMF selects a V-UPF for the UE based on the policy in the PCF.

Step 6: the V-SMF establishes an N4 tunnel with the selected V-UPF. The V-UPF sends an N4 tunnel establishment success response.

Step 7: the V-SMF requests the H-SMF to establish the PDU Session SM context information.

Step 8: the H-SMF selects the H-UPF for the UE based on the policy in the PCF.

Step 9: the H-SMF establishes the N4 tunnel with the selected H-UPF1. The H-UPF1 sends the N4 tunnel establishment success response.

Step 10: the H-SMF enquires about the UPFs belonging to the 5GLAN group. If the H-UPF selected in the step 8 is a new UPF of the 5GLAN group, the establishment process of the N19 tunnel between the new UPF and the existing UPF of the group is initiated, and the H-SMF sends the N19 tunnel establishment request assigning and carrying N19 GTP-U tunnel ID to the H-UPF1 through N4..

Step 11: the H-UPF1 sends the N19 tunnel establishment request response to the H-SMF.

Step 12: the H-SMF sends the N19 tunnel establishment request carrying the N19 GTP-U Tunnel ID to the H-UPF2 via N4.

Step 13: the H-UPF2 sends the N19 tunnel establishment success response to the H-SMF, which carries 5GLAN group ID, N19 GTP-U Tunnel ID, and UPF IP address.

Step 14: the H-SMF sends the SM context establishment response to the V-SMF.

Step 15: the V-SMF calls the Namf_Communication_N1N2MessageTransfer service.

Step 16: the AMF sends an N2 PDU Session establishment request to the RAN.

Step 17: conduct the RRC reconfiguration.

Step 18: the RAN sends an N2 PDU Session response to the AMF.

Non-claimed embodiment 4: a process of triggering N19 tunnel release when the terminal requests PDU session release in the non-roaming/roaming traffic local offloading scenario.

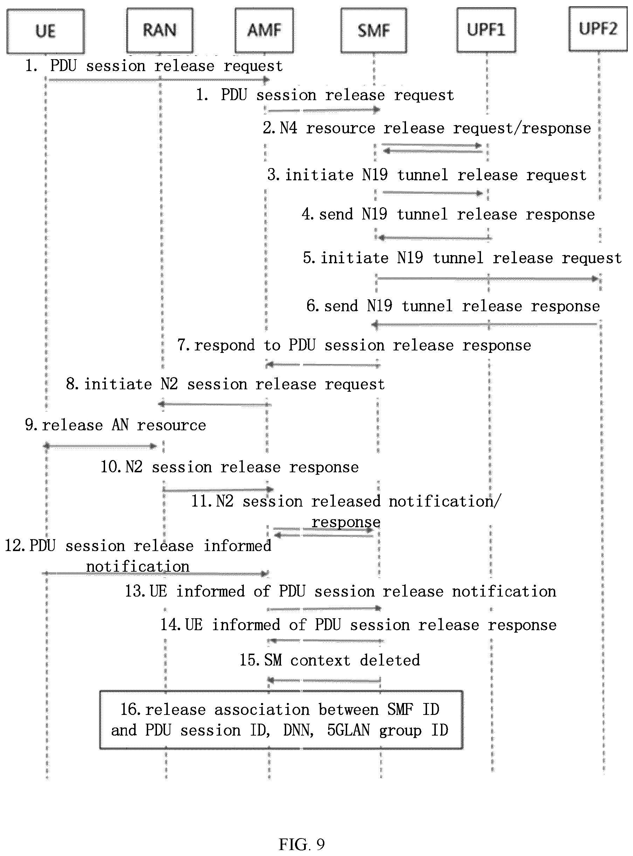

Referring to FIG. 9, the specific process is as followed.

Step 1: the UE sends a PDU session release request (carrying 5G LAN group ID, PDU session ID) by sending an NAS message, and the NAS message is sent to the AMF via the RAN. The AMF calls the Nsmf_PDUSession_UpdateSMContext service to provide an N1 SM message (carrying 5G LAN group ID, PDU session ID) to the SMF.

Step 2: the SMF releases the IP address and other user plane resources.

The SMF sends an N4 session release request to UPF1. The UPF1 sends an N4 session release response to the SMF. The SMF sends an N4 session release request to the UPF2. The UPF2 sends an N4 session release response to the SMF (not shown).

Step 3: the SMF enquires, according to group ID (which may be 5GLAN group ID/DNN), about whether another user of the group exists in the UPF. If the UE is the last user in the group, the N19 release process (N19 GTP-U Tunnel ID) is initiated.

Optionally, if the policy sent by the PCF specifies a duration for retaining the tunnel after the last user in the group releases the PDU Session, then the N19 release process is initiated if the retention duration expires and no new UE is online within the duration.

Step 4: the UPF1 abandons all packets and deletes the N19 tunnel information and context, and sends the N19 tunnel release response to the SMF.

Step 5: the SMF initiates the N19 tunnel release request (N19 GTP-U Tunnel ID) to the UPF2 at the other end of the N19 tunnel in the group.

Step 6: the UPF2 abandons all packets and deletes the N19 tunnel information and context, and sends the N19 tunnel release response to the SMF.

Step 7: the SMF responds to the AMF with Nsmf_PDUSession UpdateSMContext response.

Step 8: the AMF initiates the N2 resource release request.

Step 9: release AN resources.

Step 10: N2 resource release response.

Step 11: the AMF notifies, through the Nsmf_PDUSession_UpdateSMContext service, the SMF that N2 session has been released.

Step 12: the UE sends the PDU Session release informed message.

Step 13: the AMF notifies the SMF that UE has been informed of the PDU Session release.

Step 14: the SMF responds to the message that UE has been informed of the PDU Session release.

Step 15: the SMF notifies the AMF that the PDU Session SM context has been released.

Step 16: the AMF releases the association between SMF ID and PDU Session ID, DNN, 5GLAN group ID.

Non-claimed embodiment 5: a process of triggering N19 tunnel release when PCF/SMF requests PDU session release in the non-roaming/roaming traffic local offloading scenario.

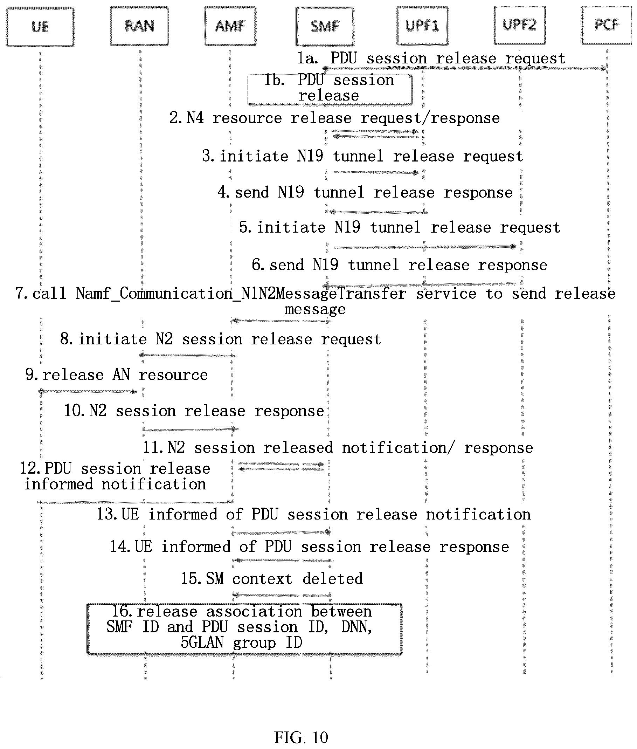

Referring to FIG. 10, the specific process is as followed.

Step 1a: the PCF calls the SM policy association termination process and initiates the PDU Session release process.

Step 1b: the SMF (DN initiates request/UDM initiates request/AMF notification that UE has moved out of the LAND Service Area is received/Local Configuration Policy/) decides to initiate the PDU Session termination process.

Step 2: the SMF releases the IP address and other user plane resources.

The SMF sends an N4 session release request to UPF1. The UPF1 sends an N4 session release response to the SMF. The SMF sends an N4 session release request to the UPF2. The UPF2 sends an N4 session release response to the SMF (not shown).

Step 3: the SMF enquires, according to group ID (which may be 5GLAN group ID/DNN), about whether another user of the group exists in the UPF. If the UE is the last user in the group, the N19 release process (N19 GTP-U Tunnel ID) is initiated.

Optionally, if the policy sent by the PCF specifies the duration for retaining the tunnel after the last user in the group releases the PDU Session, then the N19 release process is initiated if the retention duration expires and no new UE is online within the duration.

Step 4: the UPF1 abandons all packets and deletes the N19 tunnel information and context, and sends the N19 tunnel release response to the SMF.

Step 5: the SMF initiates the N19 tunnel release request (N19 GTP-U Tunnel ID) to the UPF2 at the other end of the N19 tunnel in the group.

Step 6: the UPF2 abandons all packets and deletes the N19 tunnel information and context, and sends the N19 tunnel release response to the SMF.

Step 7: the SMF calls the Namf_Communication_N1N2MessageTransfer. If the user plane connection is still in use, the SMF calls the N2 resource release request to release the RAN side resource.

Step 8: the AMF initiates the N2 resource release request.

Step 9: release AN resources.

Step 10: N2 resource release response.

Step 11: the AMF notifies, through the Nsmf_PDUSession_UpdateSMContext service, the SMF that N2 session has been released.

Step 12: the UE sends the PDU Session release informed message.

Step 13: the AMF notifies the SMF that UE has been informed of the PDU Session release.

Step 14: the SMF responds to the message that UE has been informed of the PDU Session release.

Step 15: the SMF notifies the AMF that the PDU Session SM context has been released.

Step 16: the AMF releases the association between SMF ID and PDU Session ID, DNN, 5GLAN group ID.

Non-claimed embodiment 6: a process of triggering N19 tunnel release when the UE requests PDU session release in the home-routed roaming scenario.

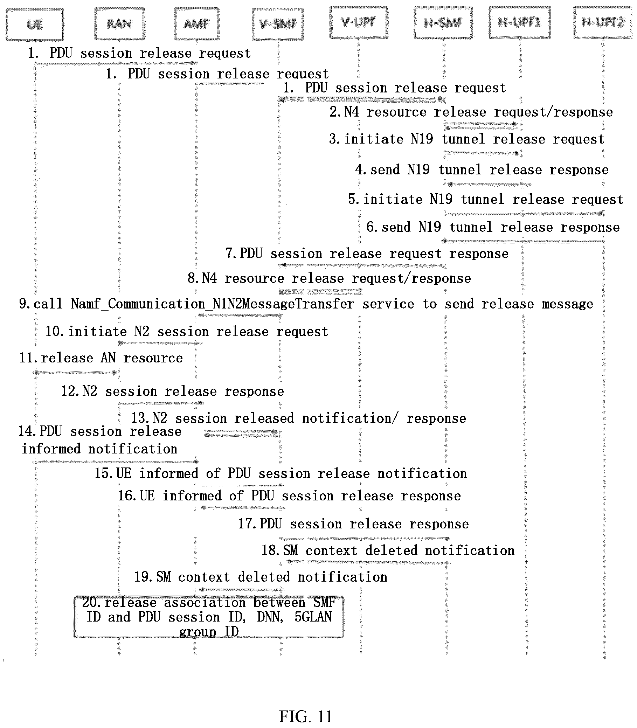

Referring to FIG. 11, the specific process is as followed.

Step 1: the UE sends a PDU session release request (carrying 5G LAN group ID, PDU session ID) by sending an NAS message, and the NAS message is sent to the AMF via the RAN. The AMF calls the Nsmf_PDUSession_UpdateSMContext service to provide an N1 SM message (carrying 5G LAN group ID, PDU session ID) to the SMF.

Step 2: the H-SMF releases the IP address and other user plane resources.

The H-SMF sends an N4 session release request to H-UPF1. The H-UPF1 sends an N4 session release response to the H-SMF. The H-SMF sends an N4 session release request to the H-UPF2. The H-UPF2 sends an N4 session release response to the H-SMF (not shown).

Step 3: H-SMF enquires, according to group ID (which may be 5GLAN group ID/DNN), about whether another user of the group exists in the H-UPF1, and if the UE is the last user in the group, the H-SMF initiates the N19 release process (N19 GTP-U Tunnel ID).

Optionally, if the policy sent by the PCF specifies the duration for retaining the tunnel after the last user in the group releases the PDU Session, then the N19 release process is initiated if the retention duration expires and no new UE is online within the duration.

Step 4: the H-UPF1 abandons all packets and deletes the N19 tunnel information and context, and sends the N19 tunnel release response to the H-SMF.

Step 5: the H-SMF initiates the N19 tunnel release request (N19 GTP-U Tunnel ID) to the H-UPF2 at the other end of the N19 tunnel in the group.

Step 6: the H-UPF2 abandons all packets and deletes the N19 tunnel information and context, and sends the N19 tunnel release response to the H-SMF.

Step 7: the H-SMF sends a PDU session release request response to the V-SMF.

Step 8: the V-SMF sends an N4 session release request to the V-UPF. The V-UPF sends the N4 session release response to the V-SMF.

Step 9: the V-SMF responds to the AMF with Nsmf_PDUSession UpdateSMContext response.

Step 10: the AMF initiates the N2 resource release request.

Step 11: release AN resources.

Step 12: N2 resource release response.

Step 13: the AMF notifies, through the Nsmf_PDUSession_UpdateSMContext service, the SMF that N2 session has been released.

Step 14: the UE sends the PDU Session release informed message.

Step 15: the AMF informs the V-SMF that UE has been informed of the PDU Session release.

Step 16: the V-SMF responds to the message that UE has been informed of the PDU Session release.

Step 17: the V-SMF sends a PDU Session release response to the H-SMF.

Step 18: H-SMF notifies V-SMF that PDU Session SM context has been released.

Step 19: V-SMF notifies AMF that PDU Session SM context has been released.

Step 20: the AMF releases the association between SMF ID and PDU Session ID, DNN, 5GLAN group ID.

Non-claimed embodiment 7: a process of triggering N19 tunnel release when SMF requests PDU session release in the home-routed roaming scenario.

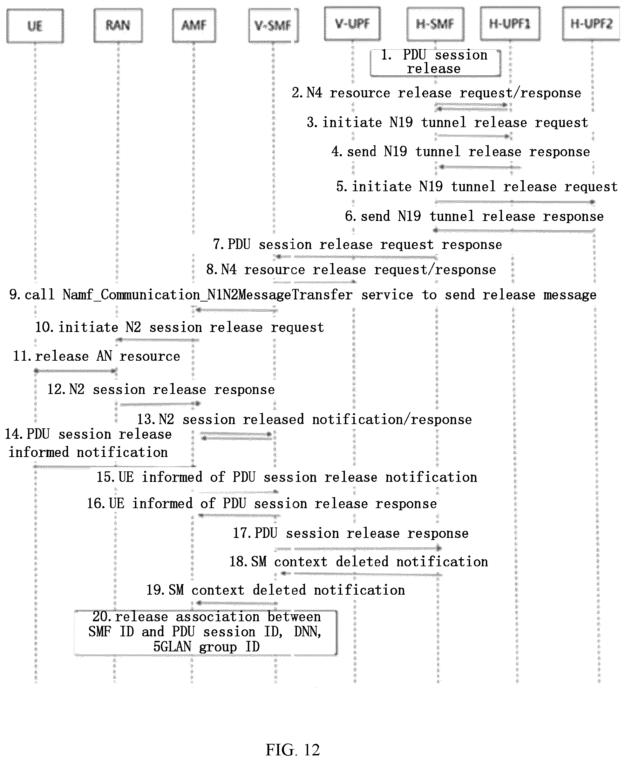

Referring to FIG. 12, the specific process is as followed.

Step 1: H-SMF (DN initiates request/UDM initiates request/AMF notification that UE has moved out of the LAND Service Area is received/Local Configuration Policy/) decides to initiate the PDU Session termination process.

Step 2: the H-SMF releases the IP address and other user plane resources.

The H-SMF sends an N4 session release request to H-UPF1. The H-UPF1 sends an N4 session release response to the H-SMF. The H-SMF sends an N4 session release request to H-UPF2. The H-UPF2 sends an N4 session release response to the H-SMF (not shown).

Step 3: H-SMF enquires, according to group ID (which may be 5GLAN group ID/DNN), about whether another user of the group exists in the H-UPF, and if the UE is the last user in the group, the H-SMF initiates the N19 release process (N19 GTP-U Tunnel ID).

Optionally, if the policy sent by the PCF specifies the duration for retaining the tunnel after the last user in the group releases the PDU Session, then the N19 release process is initiated if the retention duration expires and no new UE is online within the duration.

Step 4: the H-UPF1 abandons all packets and deletes the N19 tunnel information and context, and sends the N19 tunnel release response to the H-SMF.

Step 5: the H-SMF initiates the N19 tunnel release request (N19 GTP-U Tunnel ID) to the H-UPF2 at the other end of the N19 tunnel in the group.

Step 6: the H-UPF2 abandons all packets and deletes the N19 tunnel information and context, and sends the N19 tunnel release response to the H-SMF.

Step 7: the H-SMF sends a PDU session release request response to the V-SMF.

Step 8: the V-SMF sends an N4 session release request to the V-UPF. The V-UPF sends the N4 session release response to the V-SMF.

Step 9: the V-SMF responds to the AMF with Nsmf_PDUSession UpdateSMContext response.

Step 10: the AMF initiates the N2 resource release request.

Step 11: release AN resources.

Step 12: N2 resource release response.

Step 13: the AMF notifies, through the Nsmf_PDUSession_UpdateSMContext service, the SMF that N2 session has been released.

Step 14: the UE sends the PDU Session release informed message.

Step 15: the AMF informs the V-SMF that UE has been informed of the PDU Session release.

Step 16: the V-SMF responds to the message that UE has been informed of the PDU Session release.

Step 17: the V-SMF sends a PDU Session release response to the H-SMF.

Step 18: H-SMF notifies V-SMF that PDU Session SM context has been released.

Step 19: V-SMF notifies AMF that PDU Session SM context has been released.

Step 20: the AMF releases the association between SMF ID and PDU Session ID, DNN, 5GLAN group ID.

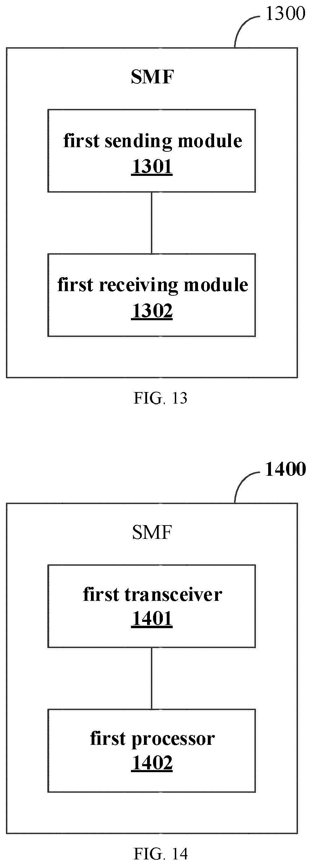

Referring to FIG. 13, an embodiment of this disclosure further provides an SMF, the SMF 1300 includes:
a first sending module 1301, configured to send an establishment request to the first UPF and the second UPF respectively, for establishing an LAN tunnel between the first UPF and the second UPF;
a first receiving module 1302, configured to receive an establishment responses from the first UPF and the second UPF respectively;
wherein, the first UPF and the second UPF belong to the same LAN group.

In some implementations, the first UPF and the second UPF are PDU session anchor UPFs for a 5G LAN-type service.

In some implementations, the LAN tunnel is named N19 tunnel.

In some implementations, the establishment request is used to establish an N19 tunnel, and the establishment request is: N4 session establishment or modification request; or, N19 session establishment request.

In some implementations, the establishment request sent to the first UPF and the second UPF includes: N19 core network tunnel information assigned by the SMF, such as N19 tunnel identifier and/or address.

In some implementations, the establishment request sent to the first UPF does not include: N19 core network tunnel information, such as N19 tunnel identifier and/or address;
the establishment response received from the first UPF includes: N19 core network tunnel information assigned by the first UPF, such as N19 tunnel identifier and/or address;
the establishment request sent to the second UPF includes: N19 core network tunnel information assigned by the first UPF, such as N19 tunnel identifier and/or address;
the establishment response received from the second UPF includes: N19 core network tunnel information assigned by the second UPF, such as N19 tunnel identifier and/or address.

In some implementations, an occasion of triggering sending an establishment request includes one occasion or a combination of multiple occasions among following occasions:
(1) when the PDU session is established, there is no N19 tunnel between the UPF selected for the PDU session and other UPF in the LAN group;
(2) there is a need for data forwarding between UPFs, and there is no N19 tunnel between UPFs;
(3) an application requirement of an application function (AF);
(4) a policy of a policy control function (PCF);
(5) an instruction of a network administrator;
(6) pre-configured by the SMF before the PDU session is established.

In some implementations, the first UPF is the UPF selected by the SMF for the PDU session when the PDU session is established, and the second UPF is any other UPF in the LAN group.

In some implementations, the first UPF and the second UPF are arbitrary UPFs in the LAN group.

The SMF provided in the embodiment of this disclosure may perform the above-described method embodiments, and has similar implementation principles and technical effects, which will not be described in this embodiment redundantly.

Referring to FIG. 14, a non-claimed embodiment of this disclosure further provides an SMF. The SMF 1200 includes a first transceiver 1401 and a first processor 1402;
the first transceiver 1401 is configured to send an establishment request to the first UPF and the second UPF respectively, for establishing an LAN tunnel between the first UPF and the second UPF;
the first transceiver 1402 is further configured to receive an establishment response from the first UPF and the second UPF respectively;
wherein, the first UPF and the second UPF belong to the same LAN group.

In some implementations, the LAN tunnel is named N19 tunnel.

In some implementations, the establishment request is used to establish an N19 tunnel, and the establishment request is: N4 session establishment or modification request; or, N19 session establishment request.

In some implementations, the establishment request sent to the first UPF and the second UPF includes: N19 core network tunnel information assigned by the SMF, such as N19 tunnel identifier and/or address.

In some implementations, the establishment request sent to the first UPF does not include: N19 core network tunnel information, such as N19 tunnel identifier and/or address;
the establishment response received from the first UPF includes: N19 core network tunnel information assigned by the first UPF, such as N19 tunnel identifier and/or address;
the establishment request sent to the second UPF includes: N19 core network tunnel information assigned by the first UPF, such as N19 tunnel identifier and/or address;
the establishment response received from the second UPF includes the N19 core network tunnel information assigned by the second UPF, such as N19 tunnel identifier and/or address.

In some implementations, an occasion of triggering sending an establishment request includes one occasion or a combination of multiple occasions among following occasions:
(1) when the PDU session is established, there is no N19 tunnel between the UPF selected for the PDU session and other UPF in the LAN group;
(2) there is a need for data forwarding between UPFs, and there is no N19 tunnel between UPFs;
(3) an application requirement of an application function (AF);
(4) a policy of a policy control function (PCF);
(5) an instruction of a network administrator;
(6) pre-configured by the SMF before the PDU session is established.

In some implementations, the first UPF is the UPF selected by the SMF for the PDU session when the PDU session is established, and the second UPF is any other UPF in the LAN group.

In some implementations, the first UPF and the second UPF are arbitrary UPFs in the LAN group.

The SMF provided in the embodiment of this disclosure may perform the above-described method embodiments, and has similar implementation principles and technical effects, which will not be described in this embodiment redundantly.

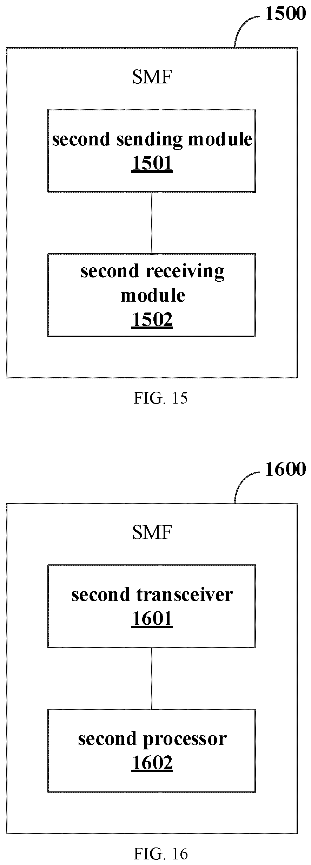

Referring to FIG. 15, a non-claimed embodiment of this disclosure further provides an SMF, and the SMF1500 includes:
a second sending module 1501, configured to send a release request to the first UPF and the second UPF respectively, for releasing the LAN tunnel between the first UPF and the second UPF;
a second receiving module 1502, configured to receive a release response from the first UPF and the second UPF respectively;
wherein, the first UPF and the second UPF belong to the same LAN group.

In some implementations, the first UPF and the second UPF are PDU session anchor UPFs for a 5G LAN-type service.

In some implementations, the LAN tunnel is named N19 tunnel, but is of course not limited thereto.

In some implementations, the release request is used to delete the N19 tunnel, and the release request is: N4 session release or delete or modify request; or, N19 session release or deletion request.

In some implementations, the release request includes N19 core network tunnel information, such as an N19 tunnel identifier or address.

In some implementations, an occasion of triggering sending the release request includes one occasion or a combination of multiple occasions among following occasions:
when the PDU session is deleted, the UPF where the PDU session is located does not have other user/session of the LAN group;
there is no need for data forwarding between UPFs.

In some implementations, the first UPF is the UPF where the PDU session is located when the PDU session is deleted, and the second UPF is any other UPF in the LAN group.

In some implementations, the first UPF and the second UPF are arbitrary UPFs in the LAN group.

The SMF provided in the embodiment of this disclosure may perform the above method embodiments, and has similar implementation principles and technical effects, which will not be described in this embodiment redundantly.

Referring to FIG. 16, a non-claimed embodiment of this disclosure further provides an SMF, and the SMF 1600 includes a second transceiver 1601 and a second processor 1602;
the second transceiver 1601 is configured to send a release request to the first UPF and the second UPF respectively, for releasing the LAN tunnel between the first UPF and the second UPF;
the second transceiver 1602 is further configured to receive a release response from the first UPF and the second UPF respectively;
wherein, the first UPF and the second UPF belong to the same LAN group.

In some implementations, the first UPF and the second UPF are PDU session anchor UPFs used for a 5G LAN-type service.

In some implementations, the LAN tunnel is named N19 tunnel.

In some implementations, the release request is used to delete the N19 tunnel, and the release request is: N4 session release or delete or modify request; or, N19 session release or deletion request.

In some implementations, the release request includes an N19 core network tunnel information, such as an N19 tunnel identifier or address.

In some implementations, an occasion of triggering sending the release request includes one occasion or a combination of multiple occasions among following occasions:
when the PDU session is deleted, the UPF where the PDU session is located does not have other user/session of the LAN group;
there is no need for data forwarding between UPFs.

In some implementations, the first UPF is the UPF where the PDU session is located when the PDU session is deleted, and the second UPF is any other UPF in the LAN group.

In some implementations, the first UPF and the second UPF are arbitrary UPFs in the LAN group.

The SMF provided in the embodiment of this disclosure may perform the above method embodiments, and has similar implementation principles and technical effect, which will not be described in this embodiment redundantly.

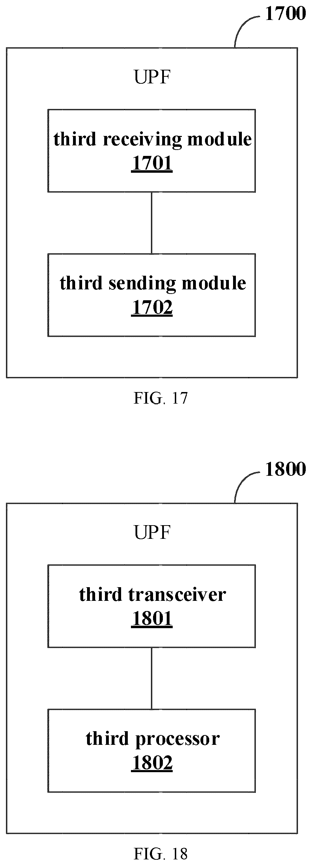

Referring to FIG. 17, a non-claimed embodiment of this disclosure further provides a UPF, and the UPF 1700 includes:
a third receiving module 1701, configured to receive an establishment request for establishing an LAN tunnel between UPFs from the SMF;
a third sending module 1702, configured to send an establishment response to the SMF.

In some implementations, the UPF is the UPF selected by the SMF for the PDU session when the PDU session is established.

In some implementations, the UPF is an arbitrary UPF in the LAN group.

In some implementations, the UPF is a PDU session anchor UPF used for a 5G LAN-type service.

In some implementations, the name of the LAN tunnel is N19 tunnel, and it is of course understood that the name of the LAN tunnel is not specifically limited in the embodiments of this disclosure.

In some implementations, the establishment request is used to establish the N19 tunnel, and the establishment request is: N4 session establishment request (N4 Session Establishment Request) or N4 session modification request, or N19 session establishment request (N19 Session Establishment Request). Optionally, the establishment request includes: session identifier (such as N19 Session ID) and/or tunnel identifier.

In some implementations, the establishment request may include: the identifier and/or address of the N19 tunnel assigned by the SMF. In other implementations, the establishment request may not include N19 tunnel identifier and/or address.

In some implementations, the establishment response may include the identifier and/or address of the N19 tunnel assigned by the UPF.

For example, if the SMF assigns the tunnel ID or the like, the request message sent to the first UPF and the second UPF contains a core network tunnel message assigned to the first UPF and the second UPF, i.e., ID and IP address of the UPF side N19 tunnel.

If the UPF assigns tunnel ID or other information, the message sent by SMF to the first UPF has no tunnel ID information, a response message includes tunnel information assigned by UPF (core network tunnel message, i.e., the ID and IP address of the UPF side N19 tunnel), and then the message sent by the SMF to the second UPF includes tunnel information, and in the response message of the second UPF, the UPF2 tunnel information assigned by the UPF2 is sent to the SMF. Subsequently, the SMF sends the tunnel information to the first UPF.

In some implementations, an occasion of triggering the SMF to send the establishment request includes one or more of the following:
(1) when the PDU session is established, there is no N19 tunnel between UPF selected for the PDU session and other UPF in the LAN group;
(2) there is a need for data forwarding between UPFs, and there is no N19 tunnel between the UPFs;
(3) an application requirement of an application function (AF);
(4) a policy of a policy control function (PCF);
(5) an instruction of a network administrator;
(6) pre-configured by the SMF before the PDU session is established.

The UPF provided in the embodiment of this disclosure may perform the above method embodiments, and has similar implementation principles and technical effects, which will not be described in this embodiment redundantly.

Referring to FIG. 18, a non-claimed embodiment of this disclosure further provides a UPF, and the UPF 1800 includes a third transceiver 1801 and a third processor 1802;
the third transceiver 1801 is configured to receive an establishment request for establishing an LAN tunnel between UPFs from the SMF;
the third transceiver 1801 is further configured to send an establishment response to the SMF.

In some implementations, the UPF is the UPF selected by the SMF for the PDU session when the PDU session is established.

In some implementations, the UPF is an arbitrary UPF in the LAN group.

In some implementations, the UPF is a PDU session anchor UPF used for a 5G LAN-type service.

In some implementations, the name of the LAN tunnel is N19 tunnel, and it is of course understood that the name of the LAN tunnel is not specifically limited in the embodiments of this disclosure.

In some implementations, the establishment request is used to establish the N19 tunnel, and the establishment request is: N4 session establishment request (N4 Session Establishment Request) or N4 session modification request, or N19 session establishment request (N19 Session Establishment Request). Optionally, the establishment request includes: session identifier (such as N19 Session ID) and/or tunnel identifier.

In some implementations, the establishment request may include the identifier and/or address of the N19 tunnel assigned by the SMF. In other implementations, the establishment request may not include N19 tunnel identifier and/or address.

In some implementations, the establishment response may include the identifier and/or address of the N19 tunnel assigned by the UPF.

For example, if the SMF assigns the tunnel ID or the like, the request message sent to the first UPF and the second UPF contains a core network tunnel message assigned to the first UPF and the second UPF, i.e., the ID and IP address of the UPF side N19 tunnel.

If the UPF assigns tunnel ID or other information, the message sent by SMF to the first UPF has no tunnel ID information, a response message includes tunnel information assigned by UPF (core network tunnel message, i.e., the ID and IP address of the UPF side N19 tunnel), and then the message sent by the SMF to the second UPF includes tunnel information, and in the response message of the second UPF, the UPF2 tunnel information assigned by the UPF2 is sent to the SMF. Subsequently, the SMF sends the tunnel information to the first UPF.

In some implementations, an occasion of triggering the SMF to send the establishment request includes one or more of the following:
(1) when the PDU session is established, there is no N19 tunnel between UPF selected for the PDU session and other UPF in the LAN group;
(2) there is a need for data forwarding between UPFs, and there is no N19 tunnel between the UPFs;
(3) an application requirement of an application function (AF);
(4) a policy of a policy control function (PCF);
(5) an instruction of a network administrator;
(6) pre-configured by the SMF before the PDU session is established.

The UPF provided in the embodiment of this disclosure may perform the above method embodiments, and has similar implementation principles and technical effects, which will not be described in this embodiment redundantly.

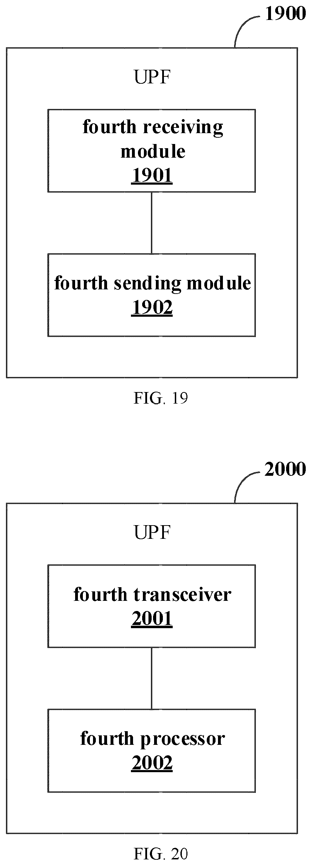

Referring to FIG. 19, a non-claimed embodiment of this disclosure further provides a UPF, and the UPF 1900 includes:
a fourth receiving module 1901, configured to receive a release request for releasing an LAN tunnel between UPFs from the SMF;
a fourth sending module 1902, configured to send a release response to the SMF.

In some implementations, the UPF is the UPF where a PDU session is located when the PDU session is deleted, and the second UPF is any other UPF in the LAN group.

In some implementations, the UPF is an arbitrary UPF in the LAN group.

In some implementations, the first UPF and the second UPF are PDU session anchor UPFs used for a 5G LAN-type service.

In some implementations, the LAN tunnel is an LAN tunnel between two PDU session anchor UPFs used for a 5G LAN-type service, and is named N19 tunnel. It is understood that the name of the LAN tunnel is not limited in the embodiments of this disclosure.

In some implementations, the release request is used to delete the N19 tunnel, and the release request is: N4 session release or deletion or modification request (N4 Session release/delete/modify Request); or, N19 session release or deletion request (N19 Session release/delete Request). Optionally, the release request carries an N19 GTP-U Tunnel ID parameter, etc.

In some implementations, the release request includes N19 core network tunnel information, such as an N19 tunnel identifier or address (e.g., an IP address).

In some implementations, an occasion of triggering the SMF to send a release request includes one or more of the following:
(1) when the PDU session is deleted, the UPF where the PDU session is located does not have other user/session of the LAN group;
(2) there is no need for data forwarding between UPFs.

The UPF provided in the embodiment of this disclosure may perform the above method embodiments, and has similar implementation principles and technical effects, which will not be described in this embodiment redundantly.

Referring to FIG. 20, a non-claimed embodiment of this disclosure further provides a UPF, and the UPF includes a fourth transceiver 2001 and a fourth processor 2002;
the fourth transceiver 2001 is configured to receive a release request for releasing an LAN tunnel between UPFs from the SMF;
the fourth transceiver 2001 is further configured to send a release response to the SMF.

In some implementations, the UPF is the UPF where the PDU session is located when the PDU session is deleted, and the second UPF is any other UPF in the LAN group.

In some implementations, the UPF is an arbitrary UPF in an LAN group.

In some implementations, the first UPF and the second UPF are PDU session anchor UPFs used for a 5G LAN-type service.

In some implementations, the LAN tunnel is an LAN tunnel between two PDU session anchor UPFs used for a 5G LAN-type service, and is named N19 tunnel. It is to be understood that the name of the LAN tunnel is not limited in the embodiments of this disclosure.

In some implementations, the release request is used to delete the N19 tunnel, and the release request is: N4 session release or delete or modification request (N4 Session release/delete/modify Request), or, N19 session release or deletion request (N19 Session release/delete Request). Optionally, the release request carries an N19 GTP-U Tunnel ID parameter, etc.

In some implementations, the release request includes N19 core network tunnel information, such as an N19 tunnel identifier or address (e.g., IP address).

In some implementations, an occasion of triggering the SMF to send a release request includes one or more of the following:
(1) when the PDU session is deleted, the UPF where the PDU session is located does not have other user/session of the LAN group;
(2) there is no need for data forwarding between UPFs.

The UPF provided in the embodiment of this disclosure may perform the above method embodiments, and has similar implementation principles and technical effects, which will not be described in this embodiment redundantly.

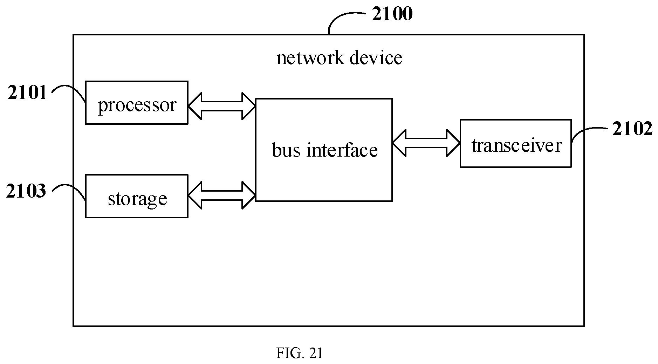

Referring to FIG. 21, FIG. 21 is a structural diagram of a network device to which embodiments of this disclosure are applicable. As shown in FIG. 21, the network device 2100 includes a processor 2101, a transceiver 2102, a storage 1703, and a bus interface, wherein:
in a non-claimed embodiment of this disclosure, the network device 2100 further includes a computer program stored in the storage 2103 and executable by the processor 2101. When the computer program is executed by the processor 2101, the steps as shown in FIG. 2, FIG.3, FIG. 4 or FIG. 5 are implemented.

In FIG. 21, the bus architecture may include any number of interconnected buses and bridges, and connects various circuits including one or more processors represented specifically by the processor 2101 and storage represented by the storage 2103. The bus architecture may also connect various other circuits such as peripherals, voltage regulators and power management circuits, which is well known in the art. Therefore, a detailed description thereof is omitted herein. A bus interface provides an interface. The transceiver 2102 may be multiple elements, that is, a receiver and a transmitter are included, to allow for communication with various other apparatuses on a transmission medium.

The processor 2101 is responsible for supervising the bus architecture and normal operation and the storage 2103 stores the data being used by the processor 2101 during operation.

It may be understood that storage 2103 in the embodiment of this disclosure may be volatile memory or non-volatile memory, or may include both volatile and non-volatile memories. Among them, the non-volatile memory can be read-only memory (ROM), programmable read-only memory (Programmable ROM, PROM), erasable programmable read-only memory (Erasable PROM, EPROM), electrically erasable programmable read-only memory (Electrically EPROM, EEPROM), or flash memory. A volatile memory can be a random access memory (RAM), which is used as an external cache. By way of example and without any limitation, various forms of RAMs are usable, such as a static RAM (SRAM), a dynamic RAM (DRAM), a synchronous DRAM (SDRAM), a double data rate SDRAM (DDRSDRAM), an enhanced SDRAM (ESDRAM), an synch link DRAM (SLDRAM), and a direct Rambus RAM (DRRAM). The storage 2103 of the systems and methods described in the embodiments of this disclosure is intended to include, without limitation, these and any other suitable types of storages.

The network device provided in the embodiment of this disclosure may perform the above method embodiments, and has similar implementation principles and technical effects, which will not be described in this embodiment redundantly.

The steps of the method or algorithm described in the present disclosure may be implemented in form of hardware, or implemented in form of a software instruction executable by a processor. The software instruction may be composed of corresponding software modules, and the software modules may be stored in an RAM, flash memory, ROM, EPROM, EEPROM, register, hard disk, removable hard disk, read-only optical disc or any other form of storage medium well known in the art. An exemplary storage medium is coupled to a processor, so that the processor may read information from the storage medium and write information to storage medium. Certainly, the storage medium may be a part of the processor. The processor and the storage medium may reside in an ASIC. In addition, the ASIC may reside in a core network interface device. Certainly, the processor and the storage medium may also reside in the core network interface device as discrete components.

Persons skilled in the art would appreciate that, in the foregoing one or more examples, the functions described by the present disclosure may be implemented with hardware, software, firmware or any combination thereof. When being implemented with software, these functions may be stored in a computer readable medium or transmitted as one or more instructions or codes in a computer readable medium. The computer readable medium includes a computer storage medium and a communication medium. The communication medium includes any medium facilitating the transmission of a computer program from one place to another. The storage medium may be any available medium accessible by a general purpose computer or a special purpose computer.

A person skilled in the art may be aware that, the exemplary units and algorithm steps described in connection with the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the disclosure.

It may be clearly understood by a person skilled in the art that, for ease of description and conciseness, for a detailed working process of the foregoing system, apparatus, and unit, reference may be made to a corresponding process in the foregoing method embodiments, and details are not described herein again.

In the several embodiments provided in the present application, it should be understood that the disclosed device and method may be implemented in other manners. For example, the described device embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electric, mechanical, or other forms.

The units described as separate parts may or may not be physically separate, and parts displayed as units may or may not be physical units, that is, may be located in one position, or may be distributed on a plurality of network units. A part or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit.

If the functions are implemented in a form of a software functional unit and sold or used as an independent product, the functions may be stored in a computer-readable storage medium. Based on such an understanding, the technical solutions of the present disclosure essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the disclosure. The foregoing storage medium includes any medium that can store program code, such as a universal serial bus (USB) flash drive, a removable hard disk, an ROM, an RAM, a magnetic disk, or an optical disc.

It is understood by a person of ordinary skill in the art that all or a part of the flows of the aforementioned methods may be implemented through hardware controlled by computer programs. The programs may be stored in a computer readable storage medium. The programs, when being executed, may include the flows of the embodiments of the aforementioned methods. Wherein the storage medium may be a magnetic disk, an optic disc, a ROM or a RAM, etc.

It may be understood that these embodiments described in this disclosure may be implemented by hardware, software, firmware, middleware, microcode or a combination thereof. For hardware implementation, a module, unit, subunit may be implemented in one or more application specific integrated circuits (ASIC), a digital signal processor (DSP), a DSP device (DSPD), a programmable logic device (PLD), a field-programmable gate array (FPGA), a general-purpose processor, a controller, a microcontroller, a microprocessor, other electronic unit configured to perform the functions in the present disclosure or a combination thereof.

For a software implementation, the techniques in some embodiments of the present disclosure may be implemented by modules (for example, processes or functions) performing the functions described in some embodiments of the present disclosure. Software codes may be stored in a storage and executed by a processor. The storage may be implemented internal or external to a processor.

The specific implementations described above further describe in detail the purposes, technical solutions and beneficial effects of this disclosure. It should be understood that these are only specific implementations of this disclosure, and are not used to define the scope of the disclosure. Any modifications, equivalent replacements, improvements, and the like based on the technical solutions of the disclosure shall be included within the scope of this disclosure.

It is appreciated by a person skilled in the art that, embodiments of the present disclosure may be implemented as a method, system or computer program product. Therefore, embodiments of the present disclosure may take the form of a complete hardware embodiment, complete software embodiment or combination of hardware and software. Moreover, embodiments of the present disclosure may take the form of a computer program product embodied as one or more computer usable storage media (including, but not limited to, a magnetic disk storage, CD-ROM, optical storage or the like) storing therein computer usable program codes.

The embodiments of the present disclosure have been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer program instructions. These computer program instructions may be provided to a processor of a general purpose computer, special purpose computer, embedded processor, or other programmable data processing apparatus to produce a machine, such that the instructions, which are executed via the processor of the computer or other programmable data processing device, create means for implementing the functions specified in the flow diagram flow or flows and/or block diagram block or blocks.

These computer program instructions may also be stored in a computer-readable storage that can direct a computer or other programmable data processing device to function in a particular manner, such that the instructions stored in the computer-readable storage produce an article of manufacture including instruction means which implement the function specified in the flow diagram flow or flows and/or block diagram block or blocks.

The computer program instructions may also be loaded onto a computer or other programmable data processing device to cause a series of operational steps to be performed on the computer or other programmable device to produce a computer-implemented process such that the instructions which are executed on the computer or other programmable device provide steps for implementing the functions specified in the flow diagram flow or flows and/or block diagram block or blocks.

## Claims

1. A local area network tunnel establishment method, applied to a session management function SMF, **characterized by** comprising:
sending (201) an establishment request to a first user plane function UPF, for establishing a local area network tunnel between the first UPF and a second UPF, wherein the establishment request sent to the first UPF does not comprise core network tunnel information;
receiving (202) an establishment response from the first UPF, wherein the establishment response received from the first UPF comprises core network tunnel information assigned by the first UPF;
sending (201) an establishment request to the second UPF, for establishing the local area network tunnel between the first UPF and the second UPF, wherein the establishment request sent to the second UPF comprises the core network tunnel information assigned by the first UPF;
receiving (202) an establishment response from the second UPF, wherein the establishment response received from the second UPF comprises core network tunnel information assigned by the second UPF; and
sending the core network tunnel information assigned by the second UPF to the first UPF.

2. The local area network tunnel establishment method according to claim 1, wherein the first UPF and the second UPF are protocol data unit PDU session anchor UPFs used for a fifth generation mobile communication technology 5G local area network-type service;
and/or,
wherein the local area network tunnel is a local area network tunnel between two PDU session anchor UPFs used for a 5G local area network-type service, and is named N19 tunnel;
and/or,
wherein the establishment request is used to establish an N19 tunnel, and the establishment request is: an N4 session establishment or modification request; or an N19 session establishment request;
and/or,
wherein the establishment request sent to the first UPF and the second UPF comprises N19 core network tunnel information assigned by the SMF.

3. The local area network tunnel establishment method according to claim 1, wherein an occasion of triggering sending the establishment request comprises one occasion or a combination of multiple occasions among following occasions:
when a PDU session is established, there is no N19 tunnel between a UPF selected for the PDU session and other UPFs in a local area network group;
there is a need for data forwarding between UPFs, but there is no N19 tunnel between UPFs;
an application requirement of an application function AF;
a policy of a policy control function PCF;
an instruction of a network administrator;
the occasion is pre-configured by the SMF before a PDU session is established.

4. The local area network tunnel establishment method according to claim 1, wherein the first UPF is a UPF selected by the SMF for a PDU session when the PDU session is established, and the second UPF is any other UPF in a local area network group; or,
the first UPF and the second UPF are arbitrary UPFs in the local area network group.

5. A session management function SMF (1300), **characterized by** comprising:
a first sending module (1301), configured to send an establishment request to a first user plane function UPF, for establishing a local area network tunnel between the first UPF and a second UPF, wherein the establishment request sent to the first UPF does not comprise core network tunnel information;
a first receiving module (1302), configured to receive an establishment response from the first UPF, wherein the establishment response received from the first UPF comprises core network tunnel information assigned by the first UPF;
wherein
the first sending module (1301) is further configured to send an establishment request to the second UPF, for establishing the local area network tunnel between the first UPF and the second UPF, wherein the establishment request sent to the second UPF comprises the core network tunnel information assigned by the first UPF;
the first receiving module (1302) is further configured to receive an establishment response from the second UPF, wherein the establishment response received from the second UPF comprises core network tunnel information assigned by the second UPF; and
the first sending module (1301) is further configured to send the core network tunnel information assigned by the second UPF to the first UPF.

6. The SMF (1300) according to claim 5, wherein the first UPF and the second UPF are protocol data unit PDU session anchor UPFs used for a fifth generation mobile communication technology 5G local area network-type service;
and/or,
wherein the local area network tunnel is a local area network tunnel between two PDU session anchor UPFs used for a 5G local area network-type service, and is named N19 tunnel;
and/or,
wherein the establishment request is used to establish an N19 tunnel, and the establishment request is: an N4 session establishment or modification request; or an N19 session establishment request;
and/or,
wherein the establishment request sent to the first UPF and the second UPF comprises N19 core network tunnel information assigned by the SMF.

7. The SMF (1300) according to claim 5, wherein an occasion of triggering sending the establishment request comprises one occasion or a combination of multiple occasions among following occasions:
when a PDU session is established, there is no N19 tunnel between a UPF selected for the PDU session and other UPFs in a local area network group;
there is a need for data forwarding between UPFs, but there is no N19 tunnel between UPFs;
an application requirement of an application function AF;
a policy of a policy control function PCF;
an instruction of a network administrator;
the occasion is pre-configured by the SMF before a PDU session is established.

8. The SMF (1300) according to claim 5, wherein the first UPF is a UPF selected by the SMF for a PDU session when the PDU session is established, and the second UPF is any other UPF in a local area network group; or,
the first UPF and the second UPF are arbitrary UPFs in the local area network group.

## Patentansprüche

1. Verfahren zum Aufbau eines lokalen Netzwerktunnels, das auf eine Sitzungsverwaltungsfunktion SMF angewendet wird, **gekennzeichnet durch**:
Senden (201) einer Aufbauanforderung an eine erste Benutzerebenenfunktion UPF zum Aufbau eines lokalen Netzwerktunnels zwischen der ersten UPF und einer zweiten UPF, wobei die an die erste UPF gesendete Aufbauanforderung keine Kernnetzwerktunnelinformation enthält;
Empfangen (202) einer Aufbauantwort von der ersten UPF, wobei die von der ersten UPF her empfangene Einrichtungsantwort von der ersten UPF zugewiesene Kernnetzwerktunnelinformation umfasst;
Senden (201) einer Aufbauanforderung an die zweite UPF zum Aufbau des lokalen Netzwerktunnels zwischen der ersten UPF und der zweiten UPF, wobei die an die zweite UPF gesendete Aufbauanforderung die von der ersten UPF zugewiesene Kernnetzwerktunnelinformation umfasst;
Empfangen (202) einer Aufbauantwort von der zweiten UPF, wobei die von der zweiten UPF her empfangene Aufbauantwort von der zweiten UPF zugewiesene Kernnetzwerktunnelinformation umfasst; und
Senden der von der zweiten UPF zugewiesenen Kernnetzwerktunnelinformation an die erste UPF.

2. Verfahren zum Aufbau eines lokalen Netzwerktunnels nach Anspruch 1, bei dem die erste UPF und die zweite UPF Protocol Data Unit-, PDU-, Sitzungsanker-UPFs sind, die für einen lokalen 5G-Netzwerkdienst der Mobilfunktechnologie fünfter Generation verwendet werden;
und/oder
bei dem der lokale Netzwerktunnel ein lokaler Netzwerktunnel zwischen zwei PDU-Sitzungsanker-UPFs ist, die für einen lokalen 5G-Netzwerkdienst verwendet werden, und der als N19-Tunnel bezeichnet wird;
und/oder
bei dem die Aufbauanforderung zum Aufbau eines N19-Tunnels verwendet wird und die Aufbauanforderung eine N4-Sitzungsaufbau- oder -änderungsanforderung oder eine N19-Sitzungsaufbauanforderung ist;
und/oder
bei dem die an die erste UPF und die zweite UPF gesendete Aufbauanforderung von der SMF zugewiesene N19-Kernnetzwerktunnelinformation umfasst.

3. Verfahren zum Aufbau eines lokalen Netzwerktunnels nach Anspruch 1, bei dem ein Anlass zum Auslösen des Sendens der Aufbauanforderung einen Anlass oder eine Kombination mehrerer Anlässe aus den folgenden Anlässen umfasst:
wenn eine PDU-Sitzung aufgebaut wird, gibt es keinen N19-Tunnel zwischen einer für die PDU-Sitzung ausgewählten UPF und anderen UPFs in einer lokalen Netzwerkgruppe;
ein besteht Bedarf an Datenweiterleitung zwischen UPFs, aber es existiert kein N19-Tunnel zwischen UPFs;
eine Anwendungsanforderung einer Anwendungsfunktion AF;
eine Richtlinie einer Richtlinienkontrollfunktion PCF;
eine Anweisung eines Netzwerkadministrators;
der Anlass ist vor dem Aufbau einer PDU-Sitzung durch die SMF vorkonfiguriert.

4. Verfahren zum Aufbau eines lokalen Netzwerktunnels nach Anspruch 1, bei dem die erste UPF eine UPF ist, die von der SMF für eine PDU-Sitzung ausgewählt wird, wenn die PDU-Sitzung aufgebaut wird, und die zweite UPF eine beliebige andere UPF in einer lokalen Netzwerkgruppe ist; oder
die erste UPF und die zweite UPF beliebige UPFs in der lokalen Netzwerkgruppe sind.

5. Sitzungsverwaltungsfunktion SMF (1300), **gekennzeichnet durch**:
ein erstes Sendemodul (1301), das konfiguriert ist, um eine Aufbauanforderung an eine erste Benutzerebenenfunktion UPF zu senden, um einen lokalen Netzwerktunnel zwischen der ersten UPF und einer zweiten UPF aufzubauen, wobei die an die erste UPF gesendete Aufbauanforderung keine Kernnetzwerktunnelinformation enthält;
ein erstes Empfangsmodul (1302), das konfiguriert ist, um eine Aufbauantwort von der ersten UPF zu empfangen, wobei die von der ersten UPF empfangene Aufbauantwort der ersten UPF von zugewiesene Kernnetzwerktunnelinformation umfasst;
wobei
das erste Sendemodul (1301) ferner konfiguriert ist, um eine Aufbauanforderung an die zweite UPF zum Aufbau des lokalen Netzwerktunnels zwischen der ersten UPF und der zweiten UPF zu senden, wobei die an die zweite UPF gesendete Aufbauanforderung die von der ersten UPF zugewiesene Kernnetzwerktunnelinformation umfasst;
das erste Empfangsmodul (1302) ferner konfiguriert ist, um eine Aufbauantwort von der zweiten UPF zu empfangen, wobei die von der zweiten UPF empfangene Aufbauantwort von der zweiten UPF zugewiesene Kernnetzwerktunnelinformation umfasst; und
das erste Sendemodul (1301) ferner konfiguriert ist, um die von der zweiten UPF zugewiesene Kernnetzwerktunnelinformation an die erste UPF zu senden.

6. SMF (1300) nach Anspruch 5, bei der die erste UPF und die zweite UPF Protocol Data Unit-, PDU-, Sitzungsanker-UPFs sind, die für einen lokalen 5G-Netzwerkdienst der Mobilfunktechnologie fünfter Generation verwendet werden;
und/oder
bei der der lokale Netzwerktunnel ein lokaler Netzwerktunnel zwischen zwei PDU-Sitzungsanker-UPFs ist, die für einen lokalen 5G-Netzwerkdienst verwendet werden, und als N19-Tunnel bezeichnet wird;
und/oder
bei der die Aufbauanforderung zum Aufbau eines N19-Tunnels verwendet wird und die Aufbauanforderung eine N4-Sitzungsaufbau- oder -änderungsanforderung oder eine N19-Sitzungsaufbauanforderung ist;
und/oder
bei der die an die erste UPF und die zweite UPF gesendete Aufbauanforderung von der SMF zugewiesene N19-Kernnetzwerktunnelinformationen umfasst.

7. SMF (1300) nach Anspruch 5, bei der ein Anlass zum Auslösen des Sendens der Aufbauanforderung einen Anlass oder eine Kombination mehrerer Anlässe aus den folgenden Anlässen umfasst:
wenn eine PDU-Sitzung aufgebaut wird, gibt es keinen N19-Tunnel zwischen einem für die PDU-Sitzung ausgewählten UPF und anderen UPFs in einer lokalen Netzwerkgruppe;
es besteht Bedarf an Datenweiterleitung zwischen UPFs, aber es existiert kein N19-Tunnel zwischen UPFs;
eine Anwendungsanforderung einer Anwendungsfunktion AF;
eine Richtlinie einer Richtlinienkontrollfunktion PCF;
eine Anweisung eines Netzwerkadministrators;
der Anlass ist vor dem Aufbau einer PDU-Sitzung durch die SMF vorkonfiguriert.

8. SMF (1300) nach Anspruch 5, wobei die erste UPF eine UPF ist, die von der SMF beim Aufbau einer PDU-Sitzung für die PDU-Sitzung ausgewählt wird, und die zweite UPF eine beliebige andere UPF in einer lokalen Netzwerkgruppe ist; oder
die erste UPF und die zweite UPF beliebige UPFs in der lokalen Netzwerkgruppe sind.

## Revendications

1. Procédé d'établissement de tunnel de réseau local, appliqué à une fonction de gestion de session SMF, **caractérisé en ce qu'**il comprend les étapes prévoyant :
d'envoyer (201) une demande d'établissement à une première fonction de plan utilisateur UPF, pour établir un tunnel de réseau local entre la première UPF et une seconde UPF, dans lequel la demande d'établissement envoyée à la première UPF ne comprend pas d'informations de tunnel de réseau central ;
de recevoir (202) une réponse d'établissement en provenance de la première UPF, dans lequel la réponse d'établissement reçue en provenance de la première UPF comprend des informations de tunnel de réseau central attribuées par la première UPF ;
d'envoyer (201) une demande d'établissement à la seconde UPF, pour établir le tunnel de réseau local entre la première UPF et la seconde UPF, dans lequel la demande d'établissement envoyée à la seconde UPF comprend les informations de tunnel de réseau central attribuées par la première UPF ;
de recevoir (202) une réponse d'établissement en provenance de la seconde UPF, dans lequel la réponse d'établissement reçue en provenance de la second UPF comprend des informations de tunnel de réseau central attribuées par la seconde UPF ; et
d'envoyer les informations de tunnel de réseau central attribuées par la seconde UPF à la première UPF.

2. Procédé d'établissement de tunnel de réseau local selon la revendication 1, dans lequel la première UPF et la seconde UPF sont des UPF d'ancrage de session d'unité de données de protocole, PDU, utilisées pour un service de type réseau local de technologie de communication mobile de cinquième génération, 5G ;
et/ou,
dans lequel le tunnel de réseau local est un tunnel de réseau local entre deux UPF d'ancrage de session de PDU utilisées pour un service de type réseau local 5G, et est nommé tunnel N19 ;
et/ou,
dans lequel la demande d'établissement est utilisée pour établir un tunnel N19, et la demande d'établissement est : une demande d'établissement ou de modification de session N4 ; ou une demande d'établissement de session N19 ;
et/ou,
dans lequel la demande d'établissement envoyée à la première UPF et à la seconde UPF comprend des informations de tunnel de réseau central N19 attribuées par la SMF.

3. Procédé d'établissement de tunnel de réseau local selon la revendication 1, dans lequel une opportunité de déclenchement de l'envoi de la demande d'établissement comprend une opportunité ou une combinaison d'opportunités multiples parmi les opportunités suivantes :
lorsqu'une session de PDU est établie, il n'y a pas de tunnel N19 entre une UPF sélectionnée pour la session de PDU et d'autres UPF dans un groupe de réseau local ;
il est nécessaire de transférer des données entre les UPF, mais il n'y a pas de tunnel N19 entre les UPF ;
une exigence d'application d'une fonction d'application, AF ;
une politique d'une fonction de commande de politique, PCF ;
une instruction d'un administrateur de réseau ;
l'opportunité est préconfigurée par la SMF avant l'établissement d'une session de PDU.

4. Procédé d'établissement de tunnel de réseau local selon la revendication 1, dans lequel la première UPF est une UPF sélectionnée par la SMF pour une session de PDU lorsque la session de PDU est établie, et la seconde UPF est tout autre UPF dans un groupe de réseau local ; ou,
la première UPF et la seconde UPF sont des UPF arbitraires dans le groupe de réseau local.

5. Fonction de gestion de session, SMF, (1300), **caractérisée en ce qu'**elle comprend :
un premier module d'envoi (1301), configuré pour envoyer une demande d'établissement à une première fonction de plan utilisateur UPF, afin d'établir un tunnel de réseau local entre la première UPF et une seconde UPF, dans laquelle la demande d'établissement envoyée à la première UPF ne comprend pas d'informations de tunnel de réseau central ;
un premier module de réception (1302), configuré pour recevoir une réponse d'établissement en provenance de la première UPF, dans laquelle la réponse d'établissement reçue de la première UPF comprend des informations de tunnel de réseau central attribuées par la première UPF ;
dans laquelle
le premier module d'envoi (1301) est en outre configuré pour envoyer une demande d'établissement à la seconde UPF, pour établir le tunnel de réseau local entre la première UPF et la seconde UPF, dans laquelle la demande d'établissement envoyée à la seconde UPF comprend les informations de tunnel de réseau central attribuées par la première UPF ;
le premier module de réception (1302) est en outre configuré pour recevoir une réponse d'établissement en provenance de la seconde UPF, dans laquelle la réponse d'établissement reçue en provenance de la seconde UPF comprend des informations de tunnel de réseau central attribuées par la seconde UPF ; et
le premier module d'envoi (1301) est en outre configuré pour envoyer les informations de tunnel de réseau central attribuées par la seconde UPF à la première UPF.

6. SMF (1300) selon la revendication 5, dans laquelle la première UPF et la seconde UPF sont des UPF d'ancrage de session d'unité de données de protocole, PDU, utilisées pour un service de type réseau local de technologie de communication mobile de cinquième génération, 5G ;
et/ou,
dans lequel le tunnel de réseau local est un tunnel de réseau local entre deux UPF d'ancrage de session de PDU utilisées pour un service de type réseau local 5G, et est nommé tunnel N19 ;
et/ou,
dans lequel la demande d'établissement est utilisée pour établir un tunnel N19, et la demande d'établissement est : une demande d'établissement ou de modification de session N4 ; ou une demande d'établissement de session N19 ;
et/ou,
dans laquelle la demande d'établissement envoyée à la première UPF et à la seconde UPF comprend des informations de tunnel de réseau central N19 attribuées par la SMF.

7. SMF (1300) selon la revendication 5, dans laquelle une opportunité de déclenchement de l'envoi de la demande d'établissement comprend une opportunité ou une combinaison d'opportunités multiples parmi les opportunités suivantes :
lorsqu'une session de PDU est établie, il n'y a pas de tunnel N19 entre une UPF sélectionnée pour la session de PDU et d'autres UPF dans un groupe de réseau local ;
il est nécessaire de transférer des données entre les UPF, mais il n'y a pas de tunnel N19 entre les UPF ;
une exigence d'application d'une fonction d'application, AF ;
une politique d'une fonction de commande de politique, PCF ;
une instruction d'un administrateur de réseau ;
l'opportunité est préconfigurée par la SMF avant l'établissement d'une session de PDU.

8. SMF (1300) selon la revendication 5, dans laquelle la première UPF est une UPF sélectionnée par la SMF pour une session de PDU lorsque la session de PDU est établie, et la seconde UPF est tout autre UPF dans un groupe de réseau local ; ou,
la première UPF et la seconde UPF sont des UPF arbitraires dans le groupe de réseau local.
